# FASCICULE DE BREVET EUROPEEN

(11) **EP 1 635 148 B1**
(45) Date de publication et mention de la délivrance du brevet: **25.12.2019**
(21) Numéro de dépôt: 05108028.1
(22) Date de dépôt: 01.09.2005
(51) Int. Cl.: G01D 5/245, G01D 5/14

(54) **Capteur d'angle intelligent pour système de retour automatique d'indicateur de changement de direction**
Intelligenter Winkelsensor für das automatische Rückstellungssystem eines Richtungsanzeigers
Intelligent angle sensor for automatic return system of a turn signal indicator

(30) Priorité: 13.09.2004 FR 0409675
(43) Date de publication de la demande: 15.03.2006
(73) Titulaire: SC2N, 94000 Créteil (FR)
(72) Inventeur: HALLET, Michel, 14320 Clinchamps-sur-Orne (FR)
(74) Mandataire: Delplanque, Arnaud

(56) Documents cités:
- EP-A- 1 035 404
- EP-A- 1 186 894
- EP-A1- 0 871 014
- EP-A1- 1 167 927
- WO-A-99/17082
- DE-A1- 19 800 774
- US-A- 5 951 398

## Description

La présente invention concerne un capteur d'angle dans un véhicule.

Plus particulièrement, l'invention propose un capteur d'angle pour véhicule, comprenant un support sur lequel reposent deux variétés de pistes s'étendant radialement par rapport à un axe de rotation du support, ces pistes étant disposées côte à côte en alternance autour de celui-ci, et coopérant avec au moins deux moyens de détection pour produire des informations relatives à la rotation du support.

On connait, par exemple du document EP 1 167 927 A1, déjà des capteurs de ce type.

On les utilise par exemple pour déterminer un angle de rotation d'un volant du véhicule.

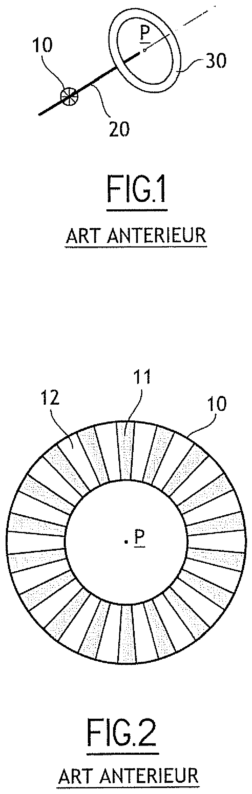

Un tel type de capteur comporte par exemple un disque 10 fixe à l'arbre de direction 20 du volant 30, de sorte qu'il se trouve sollicite en rotation lorsque ce dernier est tourne par un conducteur (voir figure 1).

La figure 2 montre un exemple de réalisation d'un tel disque.

Comme on peut l'observer, un tel disque peut supporter des pistes électriques 11,12 s'étendant chacune radialement par rapport à l'axe de rotation P du disque 10, donc de l'arbre de direction 20.

Plus précisément, le disque 10 supporte un ensemble de deux variétés de pistes 11,12 disposées en alternance a équidistance angulaire autour de lui.

La première variété de piste 11 est constituée d'un matériau conducteur, tandis que la deuxième variété de piste 12 est constituée d'un matériau isolant.

En outre, deux moyens de détection (des frotteurs par exemple) sont disposés face aux pistes de manière à coopérer avec elles et générer ainsi une information de rotation.

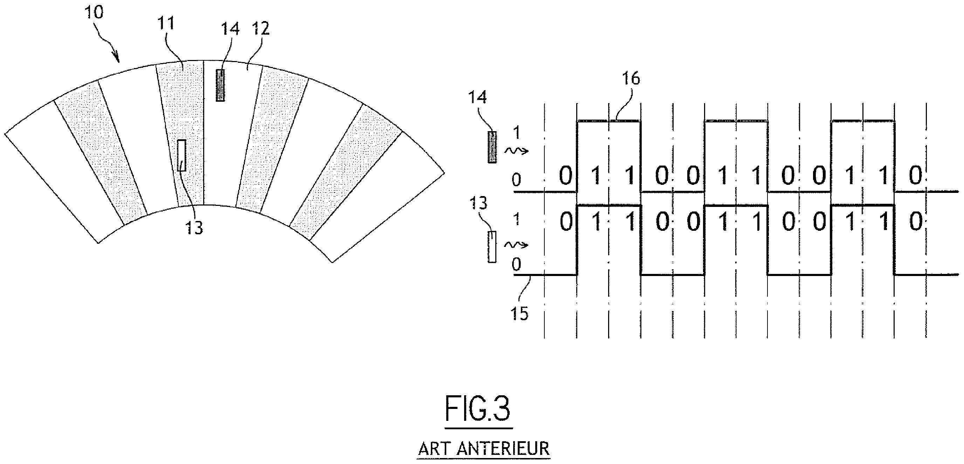

On a représenté sur la figure 3 une partie du disque 10 avec deux frotteurs 13, 14 faisant face à deux pistes successives 11 et 12 respectivement.

Par ailleurs, on peut voir aussi sur cette figure des signaux électriques 15,16 générés par un tel capteur, lesdits signaux étant porteurs d'une information sur la rotation du disque.

Ainsi, lors de cette rotation, lorsqu'un frotteur entre en contact avec une piste 11, un signal d'amplitude supérieure à un certain seuil est généré et convertit en signal binaire '1'.

De même, lorsqu'un frotteur entre en contact avec une piste 12, un signal d'amplitude inférieure à un certain seuil est généré et converti en signal binaire '0'.

Les signaux ainsi constitués sont alors analysés par un moyen d'analyse apte à traiter des informations binaires pour déduire une information sur l'angle de rotation du volant ou encore sa position.

Des capteurs du type décrit ci-dessus sont couramment appelés capteur de type relatif.

En effet, l'information fournit par ces capteurs permet d'analyser une nouvelle position du volant relativement à la position précédemment analysée.

Bien qu'offrant de nombreux services et avantages (simplicité, coût, etc.), les capteurs relatifs sont parfois inadaptés à certaines applications.

Tel est le cas par exemple lorsque l'on désire savoir si le volant se trouve en position droite, c'est-à-dire en position telle que le véhicule se dirige en ligne droite.

On sait en effet, que les capteurs d'angle relatifs sont sujets à des erreurs qui s'accumulant dans le temps vont biaiser la détermination de la position du volant.

Ces erreurs sont dues par exemple à une lecture déficiente de certaines données binaires 'l'ou '0' générées par le capteur.

Il se peut également que durant une coupure de contact dans le véhicule, le volant soit sollicité en rotation.

Lors de la prochaine mise en contact et d'une nouvelle rotation du volant, le capteur détermine alors une nouvelle position qui se trouve bien entendu erronée puisque la sollicitation du volant durant la coupure n'a pas été prise en compte.

Afin de répondre à ces problèmes, on connaît des capteurs de type absolus.

De tels capteurs comportent des moyens supplémentaires qui permettent de définir des positions angulaires de référence connues.

Par exemple, à chaque piste peut correspondre une position angulaire de référence connue.

Mais on peut aussi faire en sorte que seules certaines pistes désignent une position angulaire de référence connue.

Dans l'exemple de la position droite du volant, qui intéresse notamment la demanderesse, on doit disposer d'un capteur d'angle dont au moins la position de référence zéro degré soit connue et identifiable.

Ainsi, à chaque fois que le volant se trouve en position droite, c'est la piste de référence zéro degré qui est active.

Bien qu'un nombre important de capteurs absolus ait déjà été proposé, la plupart d'entre eux ont pour inconvénient d'être relativement complexes par rapport aux capteurs relatifs.

Comme évoqué précédemment, cela est lié à la nécessité d'obtenir d'eux des informations de position angulaire notamment fiable dans le temps et/ou précise.

Un but de la présente invention est de proposer un capteur d'angle quasi-absolu très simple, à savoir un capteur bénéficiant des avantages d'un capteur relatif dont il dérive et de certains avantages particuliers aux capteurs absolus.

Une telle simplicité est due au fait que ce capteur ne comporte aucun moyen additionnel par rapport au capteur relatif dont il dérive.

Plus précisément, la présente invention propose un capteur d'angle pour véhicule, comprenant un support sur lequel reposent deux variétés de pistes s'étendant globalement radialement par rapport à un axe de rotation du support, disposées autour de celui-ci en alternance, à équidistance angulaire, et coopérant avec des moyens de détection situés face aux pistes pour produire des informations relatives à la rotation du support, le capteur comportant au moins un groupe de deux pistes successives possédant une singularité de forme par rapport aux autres pistes, à savoir que les deux pistes (111;121) du groupe (130) ont une arête commune (151) inclinée angulairement par rapport à la direction radiale qu'elle devrait avoir si ces deux pistes ne possédaient pas de singularité de forme, caractérisé en ce qu'il comporte uniquement deux moyens (200; 210) de détection décalés angulairement et radialement l'un de l'autre de sorte qu'ils ne franchissent pas simultanément l'une quelconque des arêtes (151) sur le disque et des moyens de traitement qui reçoivent les signaux issues des moyens de détection (200 ; 210) et sont configurés pour identifier une situation où les moyens de détection (200 ; 210) se trouvent face à un groupe (130) possédant une singularité.

Des aspects préférés mais non limitatifs de ce capteur d'angle sont les suivants:
- la majorité des pistes sur le support ont deux a deux une arrête commune qui s'étend radialement par rapport à l'axe de rotation et en ce que la singularité de forme concerne l'arrête commune aux deux pistes du groupe,
- les deux pistes du groupe ont une arrête commune inclinée angulairement par rapport à la direction radiale qu'elle devrait avoir si ces deux pistes ne possédaient pas de singularité de forme, les deux moyens de détection sont:
   o situés face aux pistes,
   o décalés angulairement l'un de l'autre de sorte qu'ils ne franchissent pas simultanément l'une quelconque des arrêtes sur le disque,
- les deux moyens de détection sont décalés l'un de l'autre d'un angle égal au quart d'un angle défini entre un début et une fin d'une piste, étant entendu que cette dernière ne possède pas de singularité de forme,
- les pistes sont des pistes de type magnétique, la première variété représentant un pôle sud, la deuxième un pôle nord, et en ce que les moyens de détection sont des composants Hall,
- les pistes sont des pistes de type optique et les moyens de détection sont des composants optiques,
- la première variété de piste représente des pistes constituées d'un matériau isolant, la deuxième des pistes constituées d'un matériau conducteur, et en ce que les moyens de détection sont des composants électriques, du type frotteurs,

Un autre but de la présente invention est de proposer un système utilisé dans un véhicule caractérisé en ce qu'il comporte un capteur d'angle tel que défini ci-dessus.

Selon un aspect préféré de l'invention, un tel système est un système de retour automatique d'indicateur de changement de direction de véhicule, utilisant ce capteur d'angle.

Ainsi, grâce à la présente invention, on dispose d'un capteur et d'un système performant, peu coûteux et très simple à fabriquer.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
- la figure 1 illustre une vue en perspective d'un disque de capteur d'angle fixé à un arbre de direction solidaire d'un volant,
- la figure 2 représente en vue de face, un exemple de disque utilisé dans un capteur relatif de l'art antérieur,
- la figure 3 illustre d'une part une partie du disque de la figure 2 en coopération avec deux frotteurs pour fournir un signal numérique analysable, et d'autre part ce signal numérique,
- la figure 4 montre un disque d'un capteur conforme à l'invention, comportant un groupe de deux pistes magnétiques de forme singulière en coopération avec deux cellules de Hall représentées suivant différentes positions face à ces pistes,
- la figure 5 montre une vue agrandie des pistes singulières supportées par le disque du capteur de l'invention,
- la figure 6 illustre des exemples de position de deux cellules de Hall vis-à-vis de pistes du disque ainsi que des couples de données binaires générés par le capteur selon ces positions,
- la figure 7 montre deux positions particulières des cellules de Hall vis-à-vis des deux pistes singulières d'un groupe,
- la figure 8 montre à titre d'exemple une séquence de couples de données binaires générée par le capteur de l'invention et comportant une information singulière,
- la figure 9 montre à titre d'exemple des séquences de couples de données binaires représentatives d'une information singulière et déclarées comme telles dans un moyen de traitement,
- la figure 10 montre au contraire des exemples de séquences de couples de données binaires déclarables non valides dans le moyen de traitement et dont une analyse doit être rejetée.

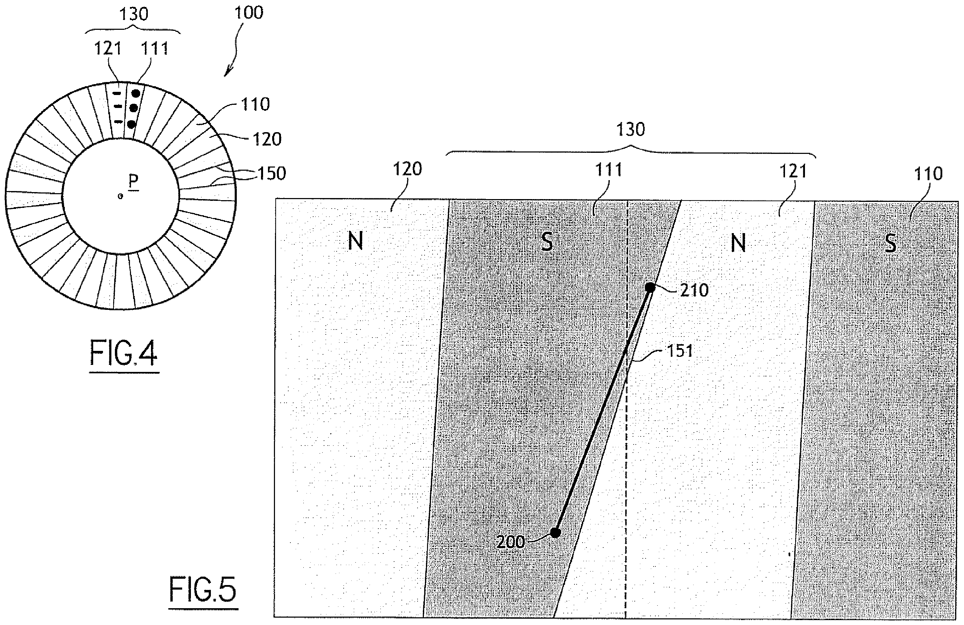

Un capteur d'angle selon l'invention comporte un support 100, typiquement un disque 100, sur lequel reposent deux variétés de pistes (voir figure 4).

Dans la suite du texte on décrira un capteur d'angle de type magnétique, cependant un tel exemple n'est bien entendu aucunement limitatif et des capteurs de type électrique, optique ou autre peuvent également être proposés sans sortir du cadre de la présente invention.

La première variété de pistes 110 concerne des pistes à pôle nord et la seconde variété 120 des pistes à pôle sud.

Comme on peut le voir sur la figure 4, chaque piste s'étend globalement radialement par rapport à un axe de rotation P du disque 100.

Elles sont disposées autour de ce dernier, et ce en alternance, c'est-à-dire qu'une piste 110 est toujours entourée de deux pistes 120 et inversement

Par ailleurs, les pistes possèdent une forme identique, à l'exception de certaines d'entre elles que nous décrirons ci-après, si bien qu'elles définissent toutes un même pas angulaire.

La forme de piste donnée en exemple correspond à un arc de disque qui s'étend radialement par rapport à l'axe de rotation P.

Ainsi, chaque piste 110,120 est plus large à la périphérie extérieure qu'à la périphérie intérieure du disque 100, ce qui définit un même secteur angulaire.

On retiendra par ailleurs que les pistes ont deux à deux une arrête commune 150.

Et cette arrête commune s'étend radialement par rapport à l'axe de rotation P du disque.

Sur la figure 4, on a illustré également deux pistes particulières 111 et 121 par des ronds et des tirets respectivement.

Il est entendu que sur cette figure la forme de ces pistes ne correspond aucunement à la réalité, le but étant ici de montrer qu'il existe, au sein des pistes « classique », deux pistes particulières 111,121 au sens où elles possèdent une singularité de forme (non représentée) par rapport aux autres.

On désignera un groupe de piste par tout ensemble de deux pistes possédant une singularité de forme.

Ainsi les deux pistes 111 et 121 sur la figure 4 forme un groupe 130.

On notera que, selon l'invention, on peut prévoir plusieurs groupes autour du disque de manière à définir plusieurs angles de référence connue.

A titre d'exemple on peut prévoir un groupe à zéro, 90, 180 et 270° pour détecter une rotation tous les quarts de tour.

En se référant maintenant à la figure 5, on peut voir en détails le groupe 130 donné en exemple sur la figure 4.

Comme l'alternance pôle sud et nord est conservée dans le groupe 130, celui-ci se trouve entouré par une piste pôle nord 120 du côté où il est constitué de la piste pôle sud 111, et par une piste pôle sud 110 du côté où il est constitué de la piste pôle nord 121.

En outre, comme pour l'ensemble des pistes en générale, on peut remarquer que, à l'instar des autres pistes prises deux à deux, les deux pistes du groupe ont une arrête commune 151.

Les arrêtes communes des pistes qui ne sont pas dans le groupe 130 s'étendent radialement par rapport à l'axe de rotation.

En revanche, l'arrête commune aux deux pistes du groupe 130 et disposée de telle manière que ces deux pistes possèdent une singularité de forme par rapport aux autres pistes.

La singularité de forme choisie dans cet exemple de réalisation vient du fait que l'arrête commune 151 aux deux pistes 111 et 121 du groupe 130 ne s'étend pas, comme les autres, radialement par rapport à l'axe de rotation P.

Elle se trouve en effet inclinée angulairement par rapport à la direction radiale qu'elle devrait avoir si le deux pistes du groupe ne possédaient pas de singularité de forme.

A cet égard les traits en pointillés illustrent justement quelle aurait dû être la direction de cette arrête dans le cas où ces deux pistes n'avaient pas possédé de singularité de forme.

Ainsi, la forme du groupe 130 possède une forme identique à celle de deux pistes quelconques réunies, mais chaque piste du groupe possède maintenant une forme distincte.

En outre, de part l'inclinaison de l'arrête commune 151, la piste 111 est rendue plus large que la piste 121 à la périphérie du disque la plus éloignée de l'axe de rotation.

En revanche, en se rapprochant radialement de l'axe de rotation, la largeur de la piste 111 décroît tandis que la piste 121 croît, de sorte que c'est la piste 121 qui devient plus large au-delà de la mi-distance entre la périphérie extérieure et intérieure du disque.

Selon l'invention on prévoit également deux moyens de détection magnétique 200,210.

Plus précisément, de tels moyens sont des cellules de Hall, connues dans certaines conditions pour être plus ou moins sensibles à un pôle sud ou nord.

Ces deux cellules de Hall font face aux pistes du disque 100.

Par ailleurs elles sont décalées angulairement l'une de l'autre de sorte qu'elles ne franchissent pas simultanément l'une quelconque des arrêtes 150,151 sur le disque, sinon un tel franchissement simultané ne permettrait pas de produire une singularité d'information.

Dans un mode préféré de l'invention, les cellules de Hall sont décalées l'une de l'autre d'un angle égal au quart de l'angle entre un début et une fin de piste, étant entendu que cette dernière ne possède pas de singularité de forme.

Ainsi, dans le cas où le disque possède 60 pôles sud et 60 pôles nord l'angle entre deux pistes, encore désigné par la suite par pas angulaire, étant de 3 degrés, le décalage angulaire entre les deux cellules de Hall 200 et 210 est de 0,75 degré.

On observera également que ce décalage entre les deux cellules 200 et 210 est réalisé de telle façon que, lors d'une rotation, ces dernières passent presque simultanément devant l'arrête commune d'un groupe, en particulier le groupe 130.

Nous verrons plus tard que cette quasi-simultanéité est avantageusement utilisée dans l'invention.

Finalement, les cellules de Hall sont disposées sur leur axe radial respectif à une distance différente du centre de rotation du disque 100.

Dans le cas de la figure 5, les cellules 200 et 210 se trouvent à une distance de la périphérie intérieure et extérieure du disque respectivement égale à environ un quart de la longueur d'une piste dans la direction radiale.

On a maintenant décrire le fonctionnement de ce capteur d'angle.

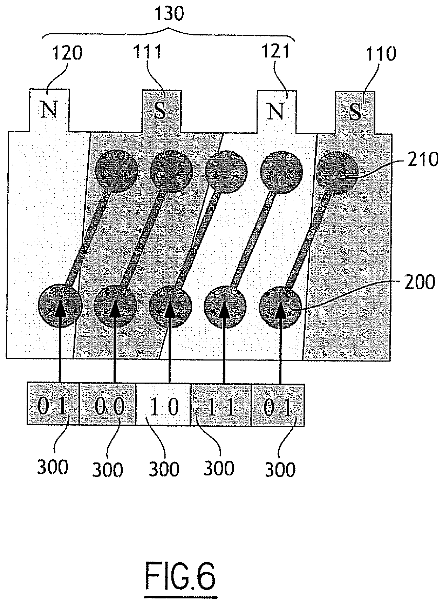

En référence à la figure 6, les cellules de Hall passent successivement devant les pistes du disque 100.

Lorsque l'une des cellules est face à une piste de type pôle nord le capteur génère un signal d'amplitude inférieur à un seuil prédéfini, tandis que ce signal est supérieur audit seuil lorsqu'elle se trouve face à un pôle sud.

Bien entendu, une telle assignation de signal aux pôles peut être inversée,

Comme le capteur comporte deux cellules de Hall, l'information fournit par celui-ci se trouve sous la forme de deux signaux qui sont convertis en données binaires '0' ou '1' selon que l'amplitude est inférieure ou supérieure respectivement

La figure 6 illustre différente situation de placement des cellules de Hall vis-à-vis de pistes du disque.

Plus précisément, les cellules passent devant une piste nord 120, les deux pistes 111 et 121 du groupe 130, puis une piste sud 110,

On peut voir d'après cette figure qu'à chaque instant le capteur génère un couple de données binaires 300.

Par exemple, le premier couple illustré à gauche est le couple [0,1] correspondant à la cellule 200 face à la piste nord 120 et la cellule 210 face à la piste sud singulière 111.

Ainsi, lors de la rotation, le capteur génère la suite de couples binaires [0,1], [0,0], [1,0], [11], [0,1], etc.

Il est important de noter que le couple [1,0] est ici singulier, car il correspond à une situation ou les cellules de Hall se trouvent de part et d'autre de l'arrête commune 151 des pistes de forme singulière 111 et 121.

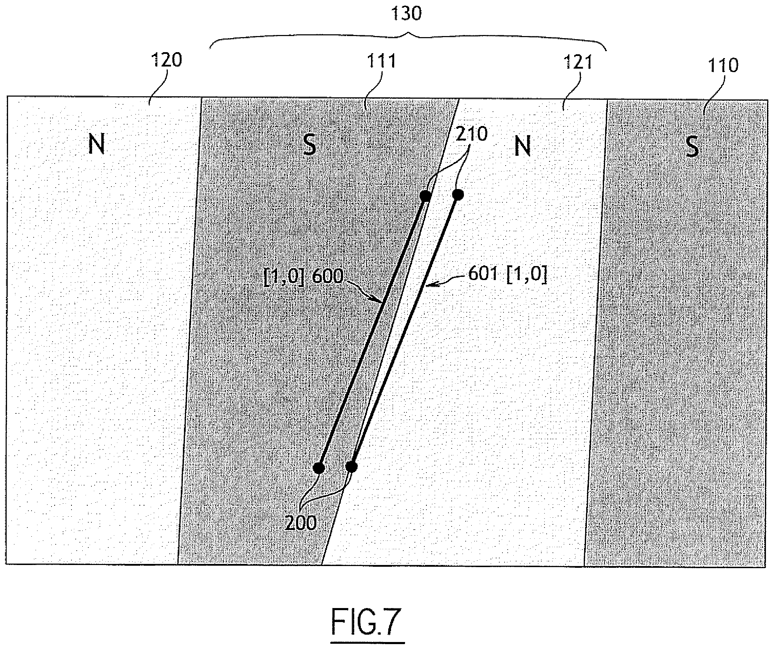

A cet égard, la figure 7 montre deux situations correspondantes à deux instants distincts particuliers.

La première situation 600 décrit l'instant particulier où chaque cellule de Hall se trouve face à une piste de forme singulière distincte.

En l'occurrence, la cellule 210 vient de passer devant la piste nord 121 et la cellule 200 est encore face à la piste sud 111.

Cette situation correspond au début d'une période où le capteur génère le couple binaire singulier [1,0].

La fin de cette période a lieu lorsque la cellule 200 vient de passer également devant la piste nord 121, ce qui correspond au deuxième instant particulier 601.

Dans ce cas, le capteur génère un couple [1,1].

L'ensemble des signaux que nous venons de décrire peuvent être mis à disposition d'un moyen de traitement de données binaires, tel un processeur, un microcontrôleur, un circuit numérique dédié ou autre circuit équivalent.

Plus précisément, ce moyen de traitement interroge le capteur à intervalle de temps constant et retire ainsi régulièrement l'information fournie.

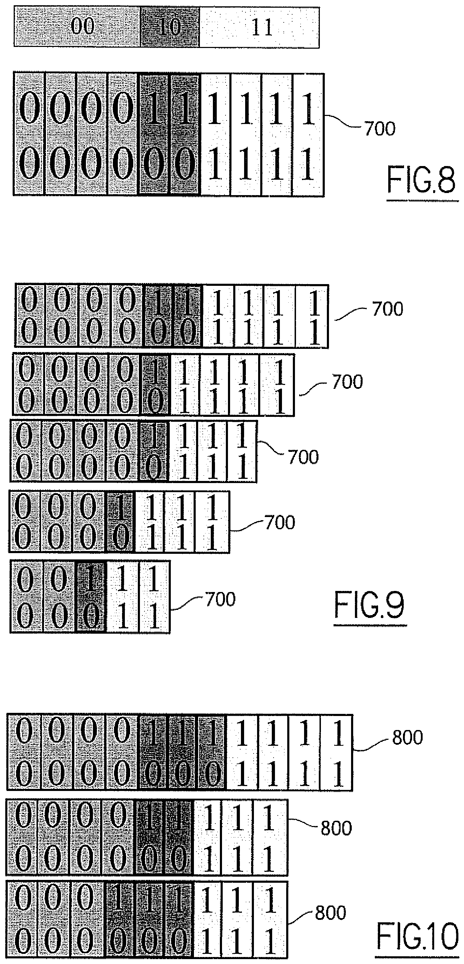

Le moyen de traitement dispose donc d'une série 700 de couple binaire analysable, tel que par exemple représentée sur la figure 8.

Sur cette figure, la vitesse de rotation est de l'ordre de 20 tours par minute, le moyen de traitement interrogeant le capteur d'angle toutes les 5 millisecondes,

Dans cette série, on peut voir que le moyen de traitement a pu lire quatre fois le couple [0,0], deux fois le couple [1,0] et quatre fois le couple [1,1], ce qui correspond au passage des cellules de Hall devant les piste représentée sur la figure 5 notamment.

Grâce à la présence des deux couples singuliers [1,0], une telle série 700 est alors reconnue par le moyen de traitement comme représentative d'un passage devant le groupe 130, c'est-à-dire devant une position de référence prédéfinie.

On notera que le nombre de couple singulier [1,0] sera toujours inférieur à celui des autres couples, car, comme évoqué précédemment, l'inclinaison de l'arrête commune 151 par rapport au position angulaire des cellules de Hall est telle que la situation qui génère un couple [1,0] existe certes mais ne dure q'un court instant.

Ainsi, l'invention utilise avantageusement la singularité de forme des deux pistes du groupe 130 pour détecter une singularité d'information (un couple [1,0]) et identifier une situation où les cellules de Hall sont face au groupe 130.

Un autre avantage de l'invention est qu'une telle singularité de forme permet de gommer des défauts de position entre les cellules de Hall et des défauts de conception des pistes.

C'est la raison pour laquelle l'inclinaison de l'arrête 151 doit être suffisamment importante pour offrir l'avantage précité et suffisamment fiable pour que l'information singulière ne dure qu'un court instant.

Bien entendu, le contenu des séries lues par le moyen de traitement être très différent de celui illustré à la figure 8.

En particulier, le nombre d'occurrence successive d'un même couple va dépendre de la vitesse de rotation par rapport à la fréquence de consultation du moyen de traitement

Dans tous les cas, ce dernier compare une série nouvellement consultée à une table de référence dans laquelle sont mémorisées des séries dites valides.

Ces séries valides sont les séries de couples binaires qui correspondent à coup sûr à une information singulière représentative d'une situation où les cellules de Hall se trouvent face à un groupe dont la position est connue en tant que référence.

La figure 9 montre des séries 700 déclarées valides dans le moyen de traitement.

Bien entendu, ces séries ne sont données qu'à titre d'exemple non limitatif et illustratif.

On retiendra simplement qu'elles sont choisies en fonction de la forte probabilité qu'elles correspondent réellement à une position de référence prédéfinie.

On peut par exemple déclarer que les séries 800 de la figure 10 ne sont pas fiables et qu'elles doivent être rejetées par le moyen de traitement

En l'occurrence, une série comportant par exemple quatre couples [0,0], trois [1,0] et quatre [1,1] ne permettant pas d'affirmer avec une relative certitude que l'on se trouve dans un situation de position de référence, sera considérée comme invalide par le moyen de traitement une fois comparée à la table de référence.

En revanche, lorsque le moyen de traitement reconnaît l'une quelconque des séries valides, il reconnaît que le moyen qui sollicite la rotation du disque (un volant par exemple) se trouve dans une position angulaire de référence connue (une position de référence liée à la position du groupe impliqué).

On notera qu'une telle utilisation de séries valides permet de s'affranchir dans une certaine mesure de problèmes divers, comme notamment une génération d'un couple binaire erroné.

La génération d'un couple erroné peut provenir de diverses causes possibles.

Il peut s'agir d'un défaut de piste.

Il peut aussi s'agir d'un défaut de coopération momentané entre une(les) cellule(s) de Hall et les pistes du disque (un délai de réaction, etc).

Il est également possible qu'une erreur de consultation de données disponibles au niveau du capteur ait lieu.

Un capteur conforme à l'invention est maintenant intégré dans un système plus complexe, tel un système de retour automatique d'indicateur de changement de direction de véhicule.

Afin de déterminer si le volant du véhicule se trouve en position droite, un groupe de deux pistes de forme singulière est positionné sur le disque du capteur de telle sorte que dans cette situation de position du volant le capteur génère l'information singulière [1,0].

Lorsqu'un équipage guidé à déplacement se trouve sollicité par un conducteur et qu'il commande une alimentation d'indicateur de changement de direction, le système détermine si le capteur d'angle doit être pris en compte pour surveiller l'instant où ladite commande doit être interrompue.

Si tel est le cas, le système consulte et analyse régulièrement les informations fournies par le capteur d'angle pour identifier une éventuelle information singulière définie par la présence d'une série de couples binaires reconnue comme valide (identification dans la table de référence).

Dans le cas où une telle identification a lieu, le système sait que le volant se trouve en position droite.

Il peut utiliser cette information parmi d'autres pour décider si ladite interruption de la commande initialement alimentée doit être mise en oeuvre.

On peut ainsi intégrer le capteur d'angle selon l'invention dans la plupart des systèmes de ce type, puisque l'information d'un passage du volant en position droite peut faire partie des informations nécessaires à la commande d'un retour automatique d'indicateur de changement de direction.

Bien entendu, l'homme du métier pourra modifier le capteur tel que décrit ici sans sortir du cadre de l'invention.

En particulier, dans un second mode de réalisation du capteur, le disque supporte des pistes de type électrique.

Leur forme est différente de celle des pistes du premier capteur présenté ci-dessus.

Une nouvelle fois, un but est de constituer des pistes de deux variétés (par exemple des pistes isolantes et conductrices) dont la forme est identique.

Puis afin d'établir une position angulaire de référence connue, modifier à cet endroit la forme de deux pistes pour constituer un groupe qui en coopération avec deux moyens de détection (par exemple des frotteurs) permet de générer une information singulière identifiable lorsque le volant se trouve dans ladite position angulaire de référence.

A cet égard, il existe aussi de nombreuses variantes de forme singulière.

En variante encore, on pourra disposer plusieurs groupes autour du disque afin de définir plusieurs positions angulaires de référence.

## Revendications

1. Capteur d'angle pour véhicule, comprenant un support (100) sur lequel reposent deux variétés de pistes (110;120) s'étendant globalement radialement par rapport à un axe de rotation du support (100), disposées autour de celui-ci en alternance, à équidistance angulaire, et coopérant avec des moyens de détection (200;210) situés face aux pistes (110; 120) pour produire des informations relatives à la rotation du support (100), le capteur comportant au moins un groupe (130) de deux pistes (111;121) successives possédant une singularité de forme par rapport aux autres pistes (110;120), à savoir que les deux pistes (111;121) du groupe (130) ont une arête commune (151) inclinée angulairement par rapport à la direction radiale qu'elle devrait avoir si ces deux pistes ne possédaient pas de singularité de forme, **caractérisé en ce qu'**il comporte uniquement deux moyens (200; 210) de détection décalés angulairement et radialement l'un de l'autre de sorte qu'ils ne franchissent pas simultanément l'une quelconque des arêtes (151) sur le disque et des moyens de traitement qui reçoivent les signaux issues des moyens de détection (200 ; 210) et sont configurés pour identifier une situation où les moyens de détection (200 ; 210) se trouvent face à un groupe (130) possédant une singularité.

2. Capteur d'angle selon la revendication 1, **caractérisé en ce que** les deux moyens de détection (200; 210) sont décalés l'un de l'autre d'un angle égal au quart d'un angle défini entre un début et une fin d'une piste (110; 120), étant entendu que cette dernière ne possède pas de singularité de forme.

3. Capteur d'angle selon l'une des revendications précédentes, **caractérisé en ce que** les pistes (110;120) sont des pistes de type magnétique, la première variété représentant un pôle sud, la deuxième un pôle nord, et **en ce que** les moyens de détection (200;210) sont des composants Hall.

4. Capteur d'angle selon l'une des revendications 1 à 2, **caractérisé en ce que** les pistes (110; 120) sont des pistes de type optique et les moyens de détection (200; 210) sont des composants optiques.

5. Capteur d'angle selon l'une des revendications 1 à 2, **caractérisé en ce que** la première variété de piste (110) représente des pistes constituées d'un matériau isolant, la deuxième des pistes (120) constituées d'un matériau conducteur, et **en ce que** les moyens de détection (200; 210) sont des composants électriques, du type frotteurs.

6. Système utilisé dans un véhicule **caractérisé en ce qu'**il comporte un capteur d'angle tel que défini par l'une quelconque des revendications précédentes.

7. Système selon la revendication précédente, **caractérisé en ce qu'**il s'agit d'un système de retour automatique d'indicateur de changement de direction de véhicule.

## Patentansprüche

1. Winkelsensor für ein Fahrzeug, der einen Träger (100) umfasst, auf welchem zwei Arten von Bahnen (110; 120) ruhen, die sich im Wesentlichen radial in Bezug auf eine Drehachse des Trägers (100) erstrecken, abwechselnd um diese herum in gleichen Winkelabständen angeordnet sind und mit Detektionsmitteln (200; 210) zusammenwirken, die sich gegenüber den Bahnen (110; 120) befinden, um Informationen in Bezug auf die Rotation des Trägers (100) zu erzeugen, wobei der Sensor mindestens eine Gruppe (130) von zwei aufeinander folgenden Bahnen (111; 121) aufweist, die eine Besonderheit der Form gegenüber den anderen Bahnen (110; 120) besitzt, nämlich dass die zwei Bahnen (111; 121) der Gruppe (130) eine gemeinsame Kante (151) haben, die bezüglich der Richtung, die sie haben müsste, wenn diese zwei Bahnen nicht die Besonderheit der Form besitzen würden, um einen Winkel geneigt ist, **dadurch gekennzeichnet, dass** er nur zwei Detektionsmittel (200; 210) aufweist, die winkelmäßig und radial derart zueinander versetzt sind, dass sie nicht gleichzeitig irgendeine der Kanten (151) auf der Scheibe überqueren, und Verarbeitungsmittel aufweist, welche die von den Detektionsmitteln (200; 210) abgegebenen Signale empfangen und dafür ausgelegt sind, eine Situation zu identifizieren, in der sich die Detektionsmittel (200; 210) gegenüber einer Gruppe (130) befinden, die eine Besonderheit aufweist.

2. Winkelsensor nach Anspruch 1, **dadurch gekennzeichnet, dass** die zwei Detektionsmittel (200; 210) zueinander um einen Winkel versetzt sind, der gleich einem Viertel eines Winkels ist, der zwischen einem Anfang und einem Ende einer Bahn (110; 120) definiert ist, vorausgesetzt, dass diese Letztere keine Besonderheit der Form besitzt.

3. Winkelsensor nach einem der vorhergehenden Ansprüche, **dadurch gekennzeichnet, dass** die Bahnen (110; 120) Bahnen vom magnetischen Typ sind, wobei die erste Art einen Südpol darstellt und die zweite Art einen Nordpol darstellt, und dadurch, dass die Detektionsmittel (200; 210) Hall-Effekt-Komponenten sind.

4. Winkelsensor nach einem der Ansprüche 1 bis 2, **dadurch gekennzeichnet, dass** die Bahnen (110; 120) Bahnen vom optischen Typ sind und die Detektionsmittel (200; 210) optische Komponenten sind.

5. Winkelsensor nach einem der Ansprüche 1 bis 2, **dadurch gekennzeichnet, dass** die erste Art von Bahnen (110) Bahnen darstellt, die aus einem isolierenden Material bestehen, und die zweite Art Bahnen (120), die aus einem leitenden Material bestehen, und dadurch, dass die Detektionsmittel (200; 210) elektrische Komponenten vom Typ von Schleifschuhen sind.

6. System, welches in einem Fahrzeug verwendet wird, **dadurch gekennzeichnet, dass** es einen Winkelsensor aufweist, wie durch einen der vorhergehenden Ansprüche definiert.

7. System nach dem vorhergehenden Anspruch, **dadurch gekennzeichnet, dass** es sich um ein System zur automatischen Rückstellung eines Fahrtrichtungsanzeigers eines Fahrzeugs handelt.

## Claims

1. Angle sensor for a vehicle, comprising a support (100) on which rest two varieties of tracks (110; 120) extending overall radially relative to an axis of rotation of the support (100), disposed around the latter alternately, angularly equidistant, and cooperating with detection means (200; 210) situated facing the tracks (110; 120) to produce information relating to the rotation of the support (100), the sensor comprising at least one group (130) of two successive tracks (111; 121) having a singularity of form with respect to the other tracks (110; 120), namely that the two tracks (111; 121) of the group (130) have a common edge (151) inclined angularly with respect to the radial direction that it should have if these two tracks did not have singularity of form, **characterized in that** it comprises only two detection means (200; 210) offset angularly and radially from one another so that they do not simultaneously cross any one of the edges (151) on the disc and processing means which receive the signals from the detection means (200; 210) and are configured to identify a situation in which the detection means (200; 210) are located facing a group (130) having a singularity.

2. Angle sensor according to Claim 1, **characterized in that** the two detection means (200; 210) are offset from one another by an angle equal to a quarter of an angle defined between a start and an end of a track (110; 120), it being understood that the latter does not have singularity of form.

3. Angle sensor according to one of the preceding claims, **characterized in that** the tracks (110; 120) are tracks of magnetic type, the first variety representing a south pole, the second a north pole, and **in that** the detection means (200; 210) are Hall components.

4. Angle sensor according to one of Claims 1 and 2, **characterized in that** the tracks (110; 120) are tracks of optical type and the detection means (200; 210) are optical components.

5. Angle sensor according to one of Claims 1 and 2, **characterized in that** the first variety of track (110) represents tracks composed of an insulating material, the second represents tracks (120) composed of a conductive material, and **in that** the detection means (200; 210) are electrical components, of friction type.

6. System used in a vehicle, **characterized in that** it comprises an angle sensor as defined by any one of the preceding claims.

7. System according to the preceding claim, **characterized in that** it is an automatic return system for indicating a change of direction of a vehicle.
